# EUROPÄISCHE PATENTSCHRIFT

(11) **EP 4 074 629 B1**
(45) Veröffentlichungstag und Bekanntmachung des Hinweises auf die Patenterteilung: **11.10.2023**
(21) Anmeldenummer: 21168927.8
(22) Anmeldetag: 16.04.2021
(51) Int. Cl.: B65G 9/00, B65G 17/20, B65G 47/61, B65G 1/137

(54) **HÄNGEFÖRDERER MIT EINER ENTLADESTATION**
OVERHEAD CONVEYOR WITH UNLOADING STATION
TRANSPORTEUR SUSPENDU DOTÉ D'UNE STATION DE DÉCHARGEMENT

(43) Veröffentlichungstag der Anmeldung: 19.10.2022
(73) Patentinhaber: BEUMER Group GmbH & Co. KG, 59269 Beckum (DE)
(72) Erfinder: Neugebauer, Jürgen, 8102 Semriach (AT)
(74) Vertreter: Angerhausen, Christoph

(56) Entgegenhaltungen:
- EP-A1- 2 792 620
- EP-B1- 2 130 968
- WO-A1-2020/150762
- US-A1- 2020 130 952

## Beschreibung

Die Erfindung geht aus von einem Hängeförderer mit einer Entladestation, der mindestens eine an einer Förderschiene des Hängeförderers hängende Tasche des Hängeförderers zugeführt ist, wobei die Tasche zwei Seitenwände aufweist, die an einem Taschenboden über eine Kupplung miteinander verbunden sind. Ein derartiger Hängeförderer ist in der US 10,040,641 B2 beschrieben. Ein weiterer Hängeförderer für Taschen ist aus der WO 2020/128941 A1 bekannt. Ein Hängeförderer mit einer Entladestation, der an einer Förderschiene des Hängeförderers hängende Taschen zugeführt werden, ist außerdem bekannt aus der WO 2020/150762 A1.

Eine weitere Entladestation und eine dafür konditionierte Tasche sind in der EP 2 130 968 B1 beschrieben. Die Tasche weist eine Tragewand auf, die in einem oberen Bereich mit einem Haken und einem schwenkbaren Bügel versehen ist sowie mit einer zumindest im unteren Bereich flexiblen Boden-Seitenwand, die in ihrem oberen Bereich mit dem schwenkbaren Bügel verbunden ist. Die Tragewand weist in einem unteren Bereich eine Kupplung sowie eine Stellmechanik zur Betätigung der Kupplung und in einem davon beabstandeten oberen Bereich nahe einer Einfüllöffnung der Tasche Mittel zum Betätigen der Stellmechanik, insbesondere zum Öffnen der Kupplung und zum Schließen der Kupplung auf.

Die EP 2 708 478 B1 beschreibt eine Tasche für einen Hängeförderer für den hängenden Transport von Objekten, aufweisend einen Halterahmen, einen Taschenbeutel, der am Halterahmen hängt und von dem zu transportierende Objekte aufnehmbar sind, und ein Aufhängeelement, welches mit dem Halterahmen verbunden ist und mittels dessen die Tragetasche an die Hängefördervorrichtung anhängbar ist, um von der Hängefördervorrichtung hängend transportiert zu werden. Der Taschenbeutel weist eine erste und eine zweite Seitenwand aufweist, die jeweils einen mit dem Halterahmen verbundenen, ersten Endabschnitt und einen vom Halterahmen abgewandten, zweiten Endabschnitt aufweisen, wobei die zweiten Beutelendabschnitte über einen Gelenkmechanismus miteinander verbunden sind, welcher in eine Entladestellung bringbar ist, in welcher die zweiten Beutelendabschnitte in einem Abstand voneinander angeordnet sind, sodass der Taschenbeutel zur Abgabe von Objekten mit einer zwischen den zweiten Beutelendabschnitten gebildeten Auslassöffnung versehen ist, und welcher in eine Beladestellung bringbar ist, in welcher die zweiten Beutelendabschnitte zueinander benachbart angeordnet sind, sodass die Auslassöffnung geschlossen ist und der Taschenbeutel Objekte aufnehmen kann.

Eine ähnliche Tasche ist auch in der WO 2018/078098 A1 beschrieben.

Die EP 2 792 620 A1 offenbart einen Hängeförderer nach dem Oberbegriff des Anspruchs 1.

Die aus dem Stand der Technik bekannten Entladestationen haben den Nachteil, dass sie entweder die Bedienung durch einen Benutzer erfordern oder, soweit sie technische Maßnahmen für die Automatisierung des Entladevorgang aufweisen, diese Maßnahmen aufwendig und damit fehleranfällig sowie kostenintensiv ausgebildet sind. Es ist daher die Aufgabe der Erfindung, einen Hängeförderer mit einer Entladestation vorzuschlagen, welcher mit einfachen technischen Mitteln die automatisierte Entladung einer Tasche eines Hängeförderers erlaubt.

Diese Aufgabe wird durch einen Hängeförderer mit den Merkmalen des Anspruchs 1 gelöst. Die abhängigen Ansprüche betreffen jeweils vorteilhafte Ausführungsformen der Erfindung.

Demgemäß ist bei einem Hängeförderer vorgesehen, dass die Kupplung der Tasche an mindestens einer von zwei gegenüberliegenden Stirnseiten ein senkrecht zur Förderrichtung der Tasche von der Stirnseite abstehendes Betätigungsende eines Schiebers einer Stellmechanik der Kupplung für die Kupplungsauslösung und die Entladestation eine sich entlang der Förderrichtung in Breitenrichtung senkrecht zur Förderrichtung verjüngende Taschenführung aufweist, durch welche die Kupplung mit dem Betätigungsende hindurchgeführt ist und die an dem Betätigungsende angreift.

Der Erfindung liegt somit die Idee zugrunde, die Auslösung der Kupplung einer Tasche gerade dadurch zu automatisieren, dass die Tasche entlang der Förderschiene des Hängeförderers durch eine sich verjüngende Taschenführung geführt wird, sodass ein sich von mindestens einer Stirnseite einer Taschenkupplung am Taschenboden erstreckendes Betätigungsende eines Schiebers einer Stellemechanik der Kupplung im Zuge des Hindurchführens der Tasche durch die Taschenführung betätigt und damit die Kupplung ausgelöst wird. Der Schieber kann im Zuge des Hindurchführens der Tasche durch die Taschenführung senkrecht zu der Förderrichtung in die Kupplung weiter eingeschoben werden, sodass sich die lichte Breite der Kupplung, einschließlich des über sein Betätigungsende stirnseitig aus der Kupplung herausragenden Schiebers entsprechend der Verjüngung der Taschenführung verringert.

Die Taschenführung kann ein statisches oder ein dynamisches Bauteil sein. Die Taschenführung kann beispielsweise ein Paar sich gegenüberstehender Führungswände aufweisen, die zwischen sich einen Führungsspalt ausbilden, welcher in der Förderrichtung die beschriebene Verjüngung aufweist. Die Taschenführung kann alternativ oder zusätzlich eine angetriebene Nockenscheibe mit vertikaler Rotationsachse aufweisen. Die Taschenführung kann ein Paar sich gegenüberstehender Nockenscheiben aufweisen, die gegenläufig angetrieben sind und zwischen sich einen Spalt mit der beschriebenen Verjüngung aufweisen. In dem Fall, dass lediglich eine Nockenscheibe mit vertikaler Rotationsachse vorgesehen ist, kann eine der Nockenscheibe gegenüberstehende vertikale Wand vorgesehen sein, sodass zwischen der Nockenscheibe und der gegenüberstehenden, vertikalen Wand in der Förderrichtung die beschriebene Verjüngung bereitgestellt ist.

Die Taschenführung kann gegenüberliegende Anfahrwände aufweisen, die sich in Förderrichtung von einem ersten Abstand auf einen zweiten Abstand einander annähern. Der erste Abstand kann größer als eine sich zwischen den gegenüberliegenden Anfahrwänden erstreckende Breite der Kupplung einschließlich des mindestens einen Betätigungsendes sein, wenn sich der Schieber der Stellmechanik in einer Verriegelungsposition der Kupplung befindet. Der zweite Abstand kann einer Breite der Kupplung einschließlich des mindestens einen Betätigungsendes entsprechen, wenn sich der Schieber der Stellmechanik in einer weiter über die Stirnseite in die Kupplung eingeschobenen Auslöseposition der Kupplung befindet.

Die Entladestation kann einen Taschenmitnehmer aufweisen, der an der Kupplung angreift und die Kupplung in der Förderrichtung antreibt.

Der Taschenmitnehmer kann die Kupplung in der Förderrichtung mindestens mit einer Geschwindigkeit antreiben, die einer Vorschubgeschwindigkeit der Förderschiene entspricht, wobei die Geschwindigkeit des Taschenmitnehmers vorzugsweise höher als die Vorschubgeschwindigkeit und besonders bevorzugt mindestens 20 % höher als die Vorschubgeschwindigkeit ist.

Der Taschenmitnehmer kann magnetische Mitnehmerelemente aufweisen, die einzeln oder paarweise an magnetischen Elementen der Kupplung gekoppelt sind. Die magnetischen Mitnehmerelemente können mindestens einen Permanentmagnet oder mindesten ein ferromagnetisches Material aufweisen.

Die magnetischen Mitnehmerelemente können paarweise gleichlaufend und fluchtend von dem Taschenmitnehmer angetrieben sein. Die paarweise gleichlaufend und fluchtend angetriebenen magnetischen Mitnehmerelemente können am Außenumfang mindestens eines umlaufenden Zugmittels, etwa einer umlaufenden Kette, eines umlaufenden Riemens oder mindestens eines umlaufenden Bandes angeordnet sein. Vorzugsweise weist der Taschenmitnehmer zwei parallel zueinander beabstandet angeordnete umlaufende Zugmittel, wie Ketten, Riemen oder Bänder auf, die insoweit synchronisiert sind, dass die auf dem Zugmittel, wie Ketten, Riemen oder Bändern angeordneten Mitnehmerelemente gleichlaufend und fluchtend von dem Taschenmitnehmer angetrieben sind und somit eine durchgehende Anlageebene für eine Kupplung bilden, die senkrecht zur Förderrichtung der Förderschiene angeordnet ist. Alternativ oder zusätzlich können die Mitnehmerelemente auch unter einem spitzen Winkel zur Horizontalen verlaufen und den Kupplungen von unten zugeführt sein. Dies erlaubt eine sanfte Ineingriffnahme der Kupplungen durch die Mitnehmerelemente.

Die magnetischen Elemente der Kupplung können dieselben magnetischen Elemente sein, mit denen die Kupplung in einer Verriegelungsposition zweier Kupplungshälften der Kupplung, in der die Kupplungshälften aneinander festgelegt sind, gehalten werden. Dem Magneten wird somit eine Doppelfunktion zugewiesen. Dazu sollten die magnetischen Elemente der Kupplung, zumindest soweit sie für die Ineingriffnahme mit den Mitnehmerelementen vorgesehen sind, als Permanentmagnete ausgebildet sein. Ein erster Pol der Permanentmagnete kann dabei einer gegenüberliegenden Kupplungshälfte der Kupplung zugewandt sein, um eine magnetische Ankopplung der gegenüberliegenden Kupplungshälfte zu erlauben, während der der gegenüberliegenden Kupplungshälfte abgewandte Pol einer Gehäuseaußenseite der dem Mitnehmerelement zugewandten Kupplungshälfte zugewandt ist, wodurch eine magnetische Ankopplung an den Mitnehmerelementen möglich wird.

Demgemäß können die magnetischen Elemente der Kupplung Permanentmagnete sein, die mit einem ersten ihrer beiden Pole eine magnetische Anziehungskraft zwischen den Kupplungshälften bereitstellen und mit einem zweiter ihrer Pole, mit dem die magnetischen Elemente der Kupplung einem der magnetischen Mitnehmerelemente zugewandt sind, mit dem magnetischen Mitnehmerelement gekoppelt sein.

Die Förderschiene kann horizontal geführt und dementsprechend die Tasche der Entladestation in horizontaler Förderrichtung zugeführt sein. Dabei kann der Taschenmitnehmer mit seinen Mitnehmerelementen unter einem ansteigenden spitzen Winkel der Kupplung zugeführt sein.

Die Kupplung der Tasche kann von dem Taschenmitnehmer eine ansteigende Rampe der Entladestation heraufgefördert sein, sodass der Taschenboden mit der Kupplung auf der Rampe abgestützt ist. Dadurch wird erreicht, dass die Kupplung auf der Rampe entlastet wird, insbesondere hinsichtlich einer Kraft, die in der Tasche aufgenommene Gegenstände auf die Kupplung ausüben. Diese Kräfte können einerseits die Gewichtskräfte der Gegenstände sein und andererseits Kräfte, die dadurch hervorgerufen werden, dass der Gegenstand aufgrund seiner Abmessungen oder weil die Tasche mit einer Vielzahl von Gegenständen befüllt ist, die gegenüberliegenden Seitenwände der Tasche auseinanderdrückt und damit eine Hebelkraft auf die Kupplung ausgeübt wird. Diese Kräfte können dazu führen, dass die Stellmechanik der Kupplung verklemmt und damit ein prozesssicheres Auslösen der Kupplung in der zuvor beschriebenen Weise erschwert wird.

Die Rampe, ein sich in Förderrichtung an die Rampe anschließendes Plateau oder eine sich an die ansteigende Rampe oder das Plateau anschließende und in Förderrichtung abfallende Rutsche kann zumindest teilweise zwischen gegenüberliegenden Anfahrwänden der sich verjüngenden Taschenführung angeordnet sein.

In Förderrichtung anschließend an eine Auslöseposition der Entladestation, bei der die Taschenführung eine maximale Verjüngung aufweist, etwa gegenüberliegende Anfahrwände der Taschenführung für die Kupplungsauslösung maximal einander angenähert sind, kann die Abstützung des Taschenbodens durch die Rampe und/oder ein sich an die Rampe anschließendes Plateau unterbrochen sein. Dadurch wird gefördert, dass angetrieben durch die Schwerkraft der Kupplungshälften oder eines in der Tasche vorgehaltenen Gegenstandes die Kupplungshälften auseinandergedrückt werden. Zusätzlich zu diesem schwerkraftinduzierten Effekt können in der zuvor beschriebenen Weise die Kupplungshälfte einen Permanentmagneten aufweisen, wobei Permanentmagnete der beiden Kupplungshälften mit gleichen Polen einander zugewandt sein können, wenn sich die Stellmechanik in der Auslöseposition befindet, sodass aufgrund der magnetischen Abstoßung die beiden Kupplungshälften zusätzlich auseinandergedrückt werden.

Die Rampe und/oder das Plateau kann von mindestens einem umlaufenden Zugmittel, etwa von einer umlaufenden Kette, von mindestens einem umlaufenden Riemen, oder von mindestens einem umlaufenden Band, an deren jeweiliger der Kupplung zugewandter Außenseite die magnetischen Mitnehmerelemente angeordnet sind, bereitgestellt sein.

Zumindest die sich in Förderrichtung verjüngende Taschenführung und vorzugsweise weiterhin ein Taschenmitnehmer, der an der Kupplung angreift und die Kupplung in der Förderrichtung antreibt, kann an einem um eine horizontale Achse verschwenkbaren Schwenkrahmen der Entladestation angeordnet sein. Dabei kann die Taschenführung unter einem Abstand zu der Schwenkachse angeordnet sein, sodass der vertikale Abstand der Taschenführung zu der Förderschiene einstellbar ist. Diese Ausführungsform erlaubt es insbesondere, auf unterschiedliche vertikale Taschenhöhen zu reagieren. Diese können beispielsweise dadurch hervorgerufen sein, dass bei Gegenständen, die eine große Abmessung in Horizontalrichtung aufweisen, die Tasche baucht und dadurch eine geringere vertikale Höhe aufweist, als wenn sie nur mit einem kleineren Gegenstand befüllt ist. Anstelle eines Schwenkmechanismus kann der Rahmen der Entladestation auch linear oder noch anderweitig verstellbar sein, solange ein Höhenversatz einstellbar ist, um auf variierende Taschenhöhen in der zuvor beschriebenen Weise reagieren zu können.

Eine Tasche des erfindungsgemäßen Hängeförderers weist zwei Seitenwände auf, die an einem Taschenboden lösbar miteinander verbunden sind. Die Seitenwände können an dem Taschenboden jeweils mindestens ein magnetisches Element aufweisen, die einander anziehen, wobei das magnetische Element einer ersten der beiden Seitenwände ein Permanentmagnet und das magnetische Element einer zweiten der beiden Seitenwände ein ferromagnetisches Metall oder ein Permanentmagnet mit in Bezug auf den Permanentmagnet der ersten der beiden Seitenwände entgegengesetzter Polung ist.

Der Taschenboden ist von einer Kupplung gebildet, mit der die Seitenwände lösbar miteinander verbunden sind, wobei jede Seitenwand eine von zwei Kupplungshälften der Kupplung aufweist.

Die Kupplung ist über eine Stellmechanik zwischen einer Verriegelungsposition, in der die Kupplungshälften aneinander festgelegt sind, und einer Auslöseposition, in der die Kupplungshälften voneinander gelöst sind, verstellbar.

Die Kupplungshälften können jeweils mindestens eines der magnetischen Elemente aufweisen, wobei die magnetischen Elemente über die Stellmechanik relativ zueinander verstellbar und in der Verriegelungsposition relativ zu der Auslöseposition weiter einander angenähert sind.

Die Kupplungshälften können jeweils mindestens ein magnetisches Element, vorzugsweise einen Permanentmagnet, aufweisen, die gleich gepolt und in der Auslöseposition relativ zu der Verriegelungsposition weiter einander angenähert und vorzugsweise mit ihren gleichen Polen sich gegenüberstehend angeordnet sind.

Die Stellmechanik kann mindestens einen Magnetschieber aufweisen, an dem das mindestens eine magnetische Element, vorzugsweise ein Permanentmagnet, einer der beiden Kupplungshälften angeordnet ist. Mit dem Magnetschieber kann ein Abstand dieses magnetischen Elements in Bezug auf das mindestens eine magnetische Element der anderen Kupplungshälfte verstellbar sein.

Der Magnetschieber kann weiterhin einen Haken oder eine zu dem Haken komplementäre hinterschnittige Hakenaufnahme aufweisen, der/die mit dem Magnetschieber zwischen der Verriegelungsposition und der Auslöseposition verstellbar ist.

Zumindest die den Magnetschieber aufweisende Kupplungshälfte kann sich entlang der Breite des Taschenbodens erstrecken, wobei der Magnetschieber in der Breitenrichtung mit einem Betätigungsende aus der Kupplungshälfte vorsteht.

Die Kupplung kann zwei Magnetschieber aufweisen, die an in Breitenrichtung des Taschenbodens gegenüberliegenden Enden des Taschenbodens in entgegengesetzter Erstreckungsrichtung mit ihrem jeweiligen Betätigungsende aus derselben oder unterschiedlichen der Kupplungshälften vorstehen.

Eine äußere Stirnseite des Betätigungsendes kann eine Anlaufkontur aufweisen, die entgegen einer vorgesehenen Förderrichtung der Tasche ansteigt.

Der Magnetschieber kann in einem Gehäuse der den Magnetschieber aufweisenden Kupplungshälfte aufgenommen sein und zumindest anteilig zu einer Formschlussaufnahme zur Aufnahme der anderen Kupplungshälfte hin freiliegen. Dabei kann der Magnetschieber die Formschlussaufnahme in Bezug auf eine Einsteckrichtung der anderen Kupplungshälfte in die Formschlussaufnahme an einem rückwärtigen Ende der Formschlussaufnahme begrenzen, sodass die andere Kupplungshälfte in ihrer vollständig in die Formschlussaufnahme eingesetzten Position dem Magnetschieber maximal angenähert ist.

Die Stellmechanik, vorzugsweise ein Magnetschieber der Stellmechanik, an dem das mindestens eine magnetische Element einer der beiden Kupplungshälften angeordnet ist, kann in der Auslöseposition eine mechanische Vorspannung in Richtung der Verriegelungsposition aufweisen.

Die Kupplung kann einen Formschlussabschnitt aufweisen, in dem die beiden Kupplungshälften mit zueinander komplementären Konturen ineinandergreifen, wobei der Formschlussabschnitt zwischen der Stellmechanik und den Seitenwänden angeordnet ist. Der Formschlussabschnitt kann eine sich in Breitenrichtung des Taschenbodens erstreckende Nut an einer ersten der beiden Kupplungshälften und eine sich in Breitenrichtung des Taschenbodens erstreckende, in der Verriegelungsposition in die Nut eingreifende Feder an der anderen der beiden Kupplungshälften aufweisen.

Die Kupplungshälften können sich für die Bereitstellung des Formschlusses im Wesentlichen über die gesamte Breite des Taschenbodens erstrecken und die Stellmechanik einschließlich eines Betätigungsendes, mit dem der Magnetschieber in der Breitenrichtung aus der Kupplungshälfte vorsteht, in der Breitenrichtung überragen, wobei an einer dem Betätigungsende zugewandten Unterseite des Formschlussabschnitts eine Auflageseite für die Kupplung geschaffen ist.

Bei einer Anordnung aus einer Tasche der zuvor beschriebenen Art und einem Taschenmitnehmer kann das mindestens eine magnetische Element einer der beiden Kupplungshälften ein Permanentmagnet sein, der mit seinem Pol, mit dem er von dem magnetischen Element der anderen Kupplungshälfte abgewandt ist, einer Gehäuseaußenseite der ihm zugeordneten Kupplungshälften zugewandt ist, sodass über einen an der Gehäuseaußenseite angekoppelten magnetischen Taschenmitnehmer die Tasche angetrieben werden kann.

Weitere Einzelheiten der Erfindung werden anhand der nachstehenden Figuren erläutert. Dabei zeigt:
- Figur 1: in schematischer Darstellung eine beispielhafte Ausführungsform eines Hängeförderers gemäß dem Stand der Technik;
- Figur 2: eine Schnittansicht eines Details einer beispielhaften Ausführungsform einer Kupplung in der Verrieglungsposition;
- Figur 3a: die Ausführungsform gemäß Figur 2 in der Auslöseposition des Stellmechanismus;
- Figur 3b: die Ausführungsform gemäß Figur 3a mit voneinander abgelösten Kupplungshälften;
- Figur 4a: die Ausführungsform gemäß Figur 3b mit dem Stellmechanismus in der Verrieglungsposition;
- Figur 4b: die Ausführungsform gemäß Figur 4a mit teilweise einander angenäherten Kupplungshälften;
- Figur 4c: die Ausführungsform gemäß Figur 4b mit vollständig einander angenäherten Kupplungshälften;
- Figur 5: in perspektivischer Darstellung eine beispielhafte Ausführungsform für eine Entladestation;
- Figur 6: eine Detailansicht der Entladestation gemäß Figur 5 mit einer Kupplung;
- Figur 7: eine Draufsicht auf einen Horizontalschnitt der Ausführungsform gemäß Figur 6 mit freien Betätigungsenden;
- Figur 8: die Ausführungsform gemäß Figur 7 mit auf die Taschenführung auftreffenden Betätigungsenden;
- Figur 9: die Ausführungsform gemäß Figur 8 mit entlang der Taschenführung maximal verlagerten Betätigungsenden;
- Figur 10: eine Querschnittsansicht senkrecht zur Längsachse einer beispielhaften Ausführungsform einer Kupplung;

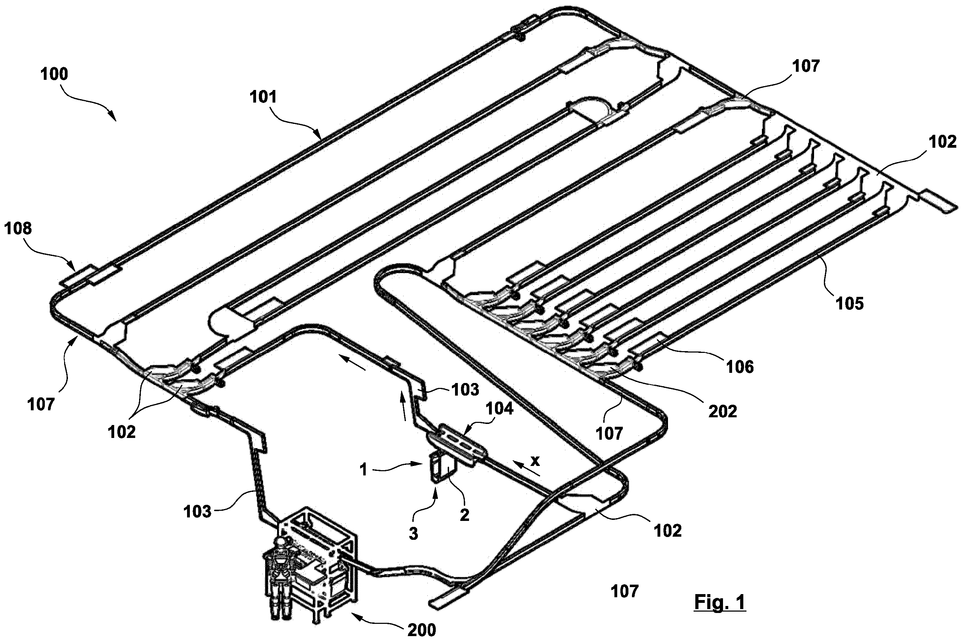

Die Fig. 1 zeigt eine beispielhafte Ausführungsform eines Hängeförderers 100 gemäß dem Stand der Technik. Der Hängeförderer 100 besteht im Wesentlichen aus einem System aus Förderschienen 101, die beispielsweise als ein Stauförderer 105 oder als ein Transferförderer 107 ausgebildet sein können. An einem Übergang 108 zwischen einem Stauförderer 105 und einem Transferförderer 107 erfolgt die Übertragung der Taschen 1 zwischen den beiden Transportsystemen. Geeignete Systeme für einen Stauförderer 105 und einen Transferförderer 107 sind in der WO 2020/128941 A1 und in der EP 3670393 A1 beschrieben.

Für die Sequenzierung der Taschen 1, welche entlang der Förderscheine 101 transportiert sind und in einer bevorzugten Reihenfolge und zu einer bevorzugten Zeit beispielsweise einem Entladearbeitsplatz 104 oder einer Entladestation 200 zugeführt werden sollen, kann eine Sortierschleife aus einer Mehrzahl parallel zueinander geführter Stauförderer 105, die vorlaufseitig und rücklaufseitig über Weichen 102 an einen Transferförderer 107 angeschlossen sein können, bereitgestellt sein. Zur Verringerung des Footprint der Anlage können Schrägförderer 103 verwendet werden, welche einen mehretagigen Aufbau der Anlage erlauben. Überfüllsensoren 106 entlang der Staufördererstrecken 105 der Sortierschleife detektieren einen Füllstand des betreffenden Stauförderers 105, um durch geeignete Umleitung von der Sortierschleife zugeführter neuer Taschen eine Überfüllung bestimmter Stauförderstrecken 105 zu vermeiden.

Obschon die komplette Anlage weitestgehend automatisiert ausgebildet ist, erfolgt zumindest die Entladung der Taschen 1 bei den aus dem Stand der Technik bekannten Anlagen noch benutzerunterstützt. Beispielsweise werden bei dem Entladearbeitsplatz 104 die von der Tasche 1 gehaltenen Gegenstände manuell aus der Tasche entfernt, etwa durch seitlichen Eingriff parallel zu den Seitenwänden 2 der Tasche 1. Die Entladestation 200 gemäß Fig. 1 kann eine Kulisse aufweisen, entlang welcher ein Öffnungsbügel der Tasche, welcher eine obere Öffnung der Tasche 1 begrenzt und an dem die zwei Seitenwände 2 unter einem Abstand zueinander auf gegenüberliegenden Seiten des Bügels befestigt sind, aus der Vertikale in die Horizontale überführt ist, sodass der Bediener von oben in die Tasche 1 eingreifen und den von der Tasche 1 aufgenommenen Gegenstand entnehmen kann. Es besteht der Wunsch, auch diesen Entladevorgang zu automatisieren. Diesen Wunsch adressiert der Gegenstand der vorliegenden Patentanmeldung.

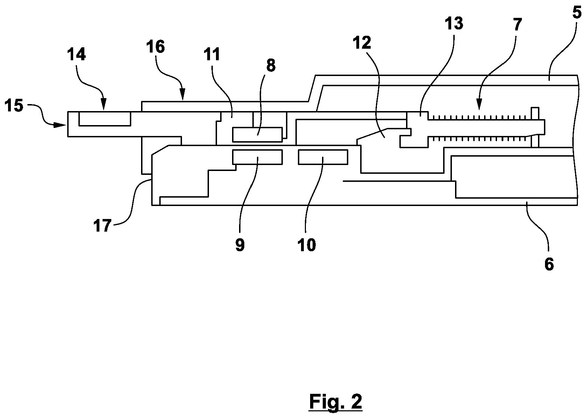

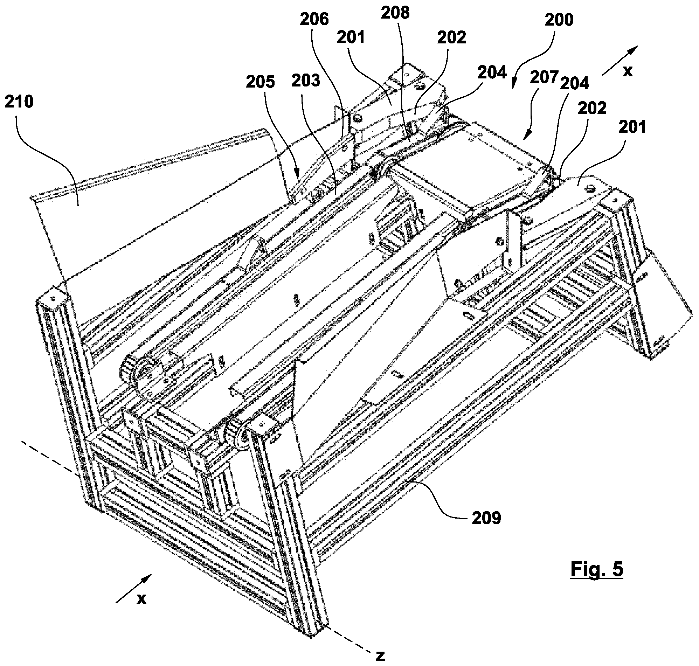

Die Figuren 2 bis 4c zeigen eine Kupplung 4, welche für die automatisierte Entriegelung geeignet ist. Die Kupplung 4 kann beispielsweise an einer Tasche 1 der Anordnung gemäß Fig. 1 im Bodenbereich 3 angeordnet sein und die beiden gegenüberliegenden und senkrecht zur Förderrichtung x ausgerichteten Seitenwände 2 der Tasche miteinander verbinden. Eine beispielhafte Entladestation für die vollautomatische Entladung der Tasche im Zuge einer automatisierten Betätigung der Kupplung 4 ist in den Figuren 5 bis 9 gezeigt.

Die Fig. 2 zeigt eine beispielhafte Ausführungsform einer Kupplung 4 in der Verriegelungsposition des Stellmechanismus 7. Der Stellmechanismus weist einen Magnetschieber 11 auf, der in einer der beiden Kupplungshälften 5, 6 entlang deren Längsrichtung verschieblich aufgenommen ist. Die Längsrichtung der Kupplung 4 bzw. der Kupplungshälften 5, 6 kann sich in der Breitenrichtung der Tasche erstrecken, das heißt horizontal und senkrecht zur Förderrichtung x (vgl. Fig. 1).

Der Magnetschieber 11 kann eine mechanische Vorspannung in die in der Fig. 2 gezeigte Verriegelungsposition aufweisen. Dazu ist bei der Ausführungsform gemäß Fig. 2 eine Spiralfeder vorgesehen, die in der den Magnetschieber 11 aufweisenden Kupplungshälfte 5 aufgenommen ist und im Innern des Gehäuses 16 der Kupplungshälfte 5 an einer Gehäusewand abgestützt ist, durch welche sich der Magnetschieber mit einem Führungszapfen hindurch erstreckt. In der in Fig. 2 gezeigten Verriegelungsposition ragt der Magnetschieber 11 mit seinem Betätigungsende 14 aus dem Gehäuse 16 der ersten Kupplungshälfte 5 um einen Verstellweg heraus, um welchen das Betätigungsende zwischen der Verriegelungsposition und der Auslöseposition verstellbar ist. In der Verriegelungsposition reicht der Haken 12 in die hinterschnittige Aufnahme 13 ein, wobei die hinterschnittige Aufnahme 13 mit einem Vorsprung, welche den von dem Haken 12 hintergriffenen Hinterschnitt bildet, den Haken 12 untergreift und an dem Haken 12 anliegt, sodass die in Fig. 2 gezeigte Verriegelungsposition der Stellmechanik 7 reproduzierbar definiert ist.

Die Kupplungshälften 5, 6 weisen magnetische Elemente 8, 9, 10 auf. Vorzugsweise sind sämtliche magnetischen Elemente 8, 9, 10 als Permanentmagnete ausgebildet. Insbesondere das Magnetelement 9 kann jedoch auch als ein ferromagnetisches Element ausgebildet sein, etwa ein eisenhaltiges Metall aufweisen.

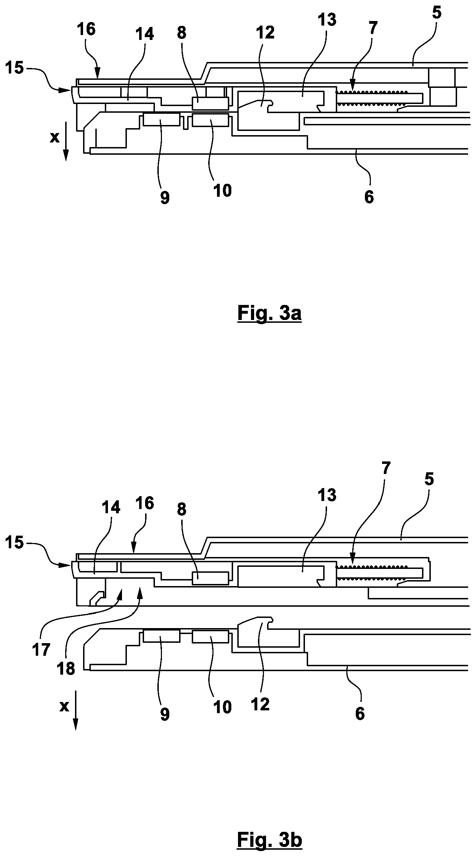

Für die Bereitstellung einer Abstoßkraft zwischen den beiden Kupplungshälften 5, 6 in der in Fig. 3a gezeigten Auslöseposition der Stellmechanik 7, können die magnetischen Elemente 8 und 10 jeweils als Permanentmagnet ausgebildet sein und sich mit identischen Polen gegenüberstehen, sodass die beiden Kupplungshälften 5, 6 von einander abgestoßen werden. Da in der in der Fig. 3a gezeigten Auslöseposition nicht nur die beiden gleichgepolten Permanentmagneten 8, 10 fluchtend einander gegenüberstehen, sondern darüber hinaus auch der Haken 12 aus dem Hinterschnitt der hinterschnittigen Aufnahme 13 herausgelöst ist, können die beiden Kupplungshälften 5, 6 von einander abgelöst werden, was in Fig. 3b gezeigt ist. Im vorliegenden Fall kann insbesondere die den Haken 12 aufweisende zweite Kupplungshälfte 6 aus einer Formschlussaufnahme 17 der ersten Kupplungshälfte 5 herausgelöst werden. Da in der Auslöseposition gemäß den Figuren 3a und 3b die gleichgepolten Permanentmagnete 8, 10 in der Flucht gegenüberstehen, während der Abstand zwischen den sich anziehenden, entgegengesetzt gepolten magnetischen Elementen 8, 9 gegenüber der Verriegelungsposition (siehe Fig. 2) vergrößert ist, überwiegt die Abstoßung zwischen den Permanentmagneten 8, 10 gegenüber einer gegebenenfalls auch in der Auslöseposition gemäß den Figuren 3a und 3b noch verbleibenden, geringen Anziehungskraft zwischen den magnetischen Elementen 8 und 9.

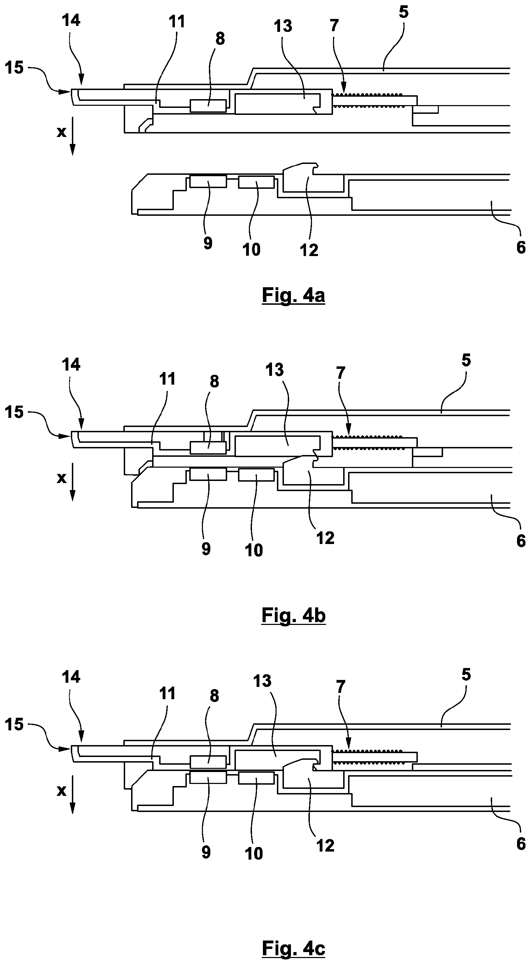

Nach dem Ablösen der beiden Kupplungshälften 5, 6 voneinander kann die Stellmechanik 7, insbesondere der Magnetschieber 11 wieder die Verriegelungsposition einnehmen, wobei er diese Verriegelungsposition aufgrund seiner Vorspannung in die Verriegelungsposition aufgrund beispielsweise der Spiralfeder selbsttätig einnimmt. Dies führt dazu, wie in den Figuren 4a und 4b gezeigt ist, dass die entgegengesetzt gepolten magnetischen Elemente 8 und 9 wieder in die Flucht gebracht werden, wobei sie selbst bei der in Fig. 4a gezeigten, teilweise beabstandeten Position aufgrund der Anziehungskraft zwischen den magnetischen Elementen 8 und 9 eine Zentrierung und weitere Annäherung zueinander erfahren, wie dies in Fig. 4b gezeigt ist. Die Ausrichtung der Kupplungshälften 5, 6 zueinander, wie sie in Fig. 4a gezeigt ist, kann beispielsweise der Ausgangszustand sein, welche die beiden Kupplungshälften 5, 6 unmittelbar nach dem Entladevorgang einnehmen, beispielsweise nach dem Verlassen einer Entladestation 200, wie sie in Fig. 5 gezeigt ist.

Die Seitenwände 2 der Tasche 1 können beispielsweise aus einem biegeschlaffen Textilmaterial bestehen, sodass die Kupplungshälften 5, 6 die Tasche wie ein Gewicht im Bodenbereich der Seitenwände 2 in die Vertikale bringen, wobei die beiden Seitenwände 2 beispielsweise aufgrund einer ebenfalls im Wesentlichen vertikalen Anordnung eines Öffnungsbügels am oberen Ende der Tasche 1 bereits weitestgehend einander angenähert sind. Ein dann noch verbleibender Restabstand zwischen den Kupplungshälften 5, 6 wie er in Fig. 4a gezeigt ist, kann mit Hilfe der magnetischen Anziehungskraft zwischen den magnetischen Elementen 8, 9 überbrückt werden, sodass die beiden Kupplungshälften 5, 6 die in den Figuren 4a bis 4c gezeigte Annäherung und Verrastung erfahren.

Nachdem die Tasche aufgrund der magnetischen Anziehungskraft zwischen den magnetischen Elementen 8 und 9 soweit einander angenähert sind, sodass der Haken 12 der zweiten Kupplungshälfte mit einer Anlaufschräge an einer korrespondierenden Anlaufschräge an einem Hinterschnitt der hinterschnittigen Aufnahme 13 der ersten Kupplungshälfte 5 zur Anlage kommt, kann aufgrund des in dieser Position verbleibenden, geringen Restabstandes zwischen der in Fig. 4b gezeigten Position und der finalen Verriegelungsposition gemäß Fig. 4c die Anziehungskraft zwischen den magnetischen Elementen 8 und 9 ausreichen, um unter Überwindung der Vorspannung des Magnetschiebers 11 in seine in Fig. 4a gezeigte Verriegelungsposition der Magnetschieber 11 zumindest soweit aus der Verriegelungsposition in Richtung der Auslöseposition verlagert wird, dass der Haken 12 mit seiner Hakenspitze den Hinterschnitt der hinterschnittigen Aufnahme 13 hintergreifen kann, wie dies in Fig. 4c gezeigt ist, woraufhin der Magnetschieber dann wieder aufgrund der mechanischen Vorspannung in die in Fig. 4c gezeigte Verriegelungsposition überführt wird. In der in Fig. 4c gezeigten vollständigen Verriegelung der beiden Kupplungshälften 5, 6 aneinander sind die beiden komplementär gepolten magnetischen Elemente 8, 9 maximal angenähert, während zwischen den gleichgepolten Magneten 8 und 10 ein lateraler Abstand besteht, welcher aufgrund der senkrecht zur Polfläche propagierenden Magnetfeldlinien ausreichend ist, um eine Abstoßung zwischen den Magneten 8, 10 auf ein zulässiges Mindestmaß zu verringern.

Der Magnetschieber 11 weist an seiner Stirnseite des Betätigungsendes 14, mit dem der Magnetschieber 11 aus dem Gehäuse 16 der ersten Kupplungshälfte 5 herausragt, eine Anlaufkontur 15 auf, mit der er in Förderrichtung x auf eine Taschenführung 201 einer Entladestation 200 trifft, welche den Magnetschieber 11 aus der in Fig. 2 gezeigten Verriegelungsposition in die in Fig. 3a gezeigte Auslöseposition überführt. Die in Fig. 5 gezeigte Entladestation 200 weist eine Rahmen 209 auf, der als ein Schwenkrahmen ausgebildet und um eine senkrecht zur Förderrichtung x gerichtete, horizontale Schwenkachse z verschwenkbar ist. Die Schwenkachse z kann horizontal verlaufen, sodass durch das Verschwenken des Schwenkrahmens 209 eine vertikale Höhe insbesondere der Taschenführung 201 der Entladestation 200 an eine vertikale Höhe der Tasche angepasst werden kann. Obschon in gängigen Hängeförderern die Taschen häufig gleichartig ausgebildet sind, kann es aufgrund der unterschiedlichen Befüllung der Taschen vorkommen, dass die Taschen 1 in ihrer Höhe variieren. Beispielsweise kann die Befüllung der Taschen 1 mit großen oder vielen Gegenstand dazu führen, dass die Tasche baucht, wodurch sie an vertikaler Abmessung verliert. Um diesen von Tasche zu Tasche variablen Höhenunterschied zu kompensieren, kann die Entladestation 200 den zuvor beschriebenen Schwenkrahmen 209 zur Verlagerung der Taschenführung 201 aufweisen. Des Weiteren kann der Entladestation eine Sensoreinrichtung in Förderrichtung vorangestellt sein, welche eine Abmessung der Taschen in Höhenrichtung erfasst und den Schwenkrahmen ansteuert eine für die Entgegennahme der in Höhenrichtung vermessenen Tasche geeignete Verschwenkung durchzuführen.

Grundsätzlich werden die Taschen 1 über die Entladestation 200 hinweggeführt, sodass die Tasche 1 im Wesentlich ausschließlich mit Ihrer Kupplung 4 mit der Entladestation 200 in Kontakt tritt. Seitenführungen 201, die konisch zulaufend ausgebildet sind, führen die Taschen in Horizontalrichtung senkrecht zur Förderrichtung x. Eine zusätzliche Führungswirkung kann mit Hilfe des Taschenmitnehmers 203 bereitgestellt sein, welcher vorliegend als ein umlaufender Zahnriemen 205 mit darauf angeordneten magnetischen Mitnehmerelementen 204 ausgebildet ist, wobei der Taschenmitnehmer 203 nicht auf eine derartige Ausführungsform beschränkt sein soll.

Die magnetischen Mitnehmerelemente 204 haben aber insbesondere den Vorteil, dass sie an den magnetischen Elementen 8, 9, 10, beispielsweise der den Magnetschieber 11 aufweisenden Kupplungshälfte 5 über den in der Kupplungshälfte 5 aufgenommenen Magneten 8 ankoppelbar ist, sodass eine besonders prozesssichere Führung der Kupplung 4 durch die sich verjüngende Taschenführung 201 hindurch möglich ist.

Die Kupplungen 4 können der Taschenführung 201 über eine Rampe und ein sich an die Rampe anschließendes Plateau zugeführt sein. Die Rampe kann die Funktion aufweisen, die Kupplung 4 anzuheben und damit mechanisch zu entlasten, beispielsweise hinsichtlich einer Scherkraft, die auf die Kupplung aufgrund der in der Tasche vorgehaltenen Gegenstände wirkt. Dies erleichtert die Betätigung der Stellmechanik und damit die Auslösung der Kupplungshälften 5, 6 voneinander. Insbesondere soll die Kupplung 4 in ihrem angehobenen und insoweit entlasteten Zustand durch die Taschenführung 201 hindurch und insbesondere an den Anfahrwänden 202 der Taschenführung 201 entlanggeführt werden.

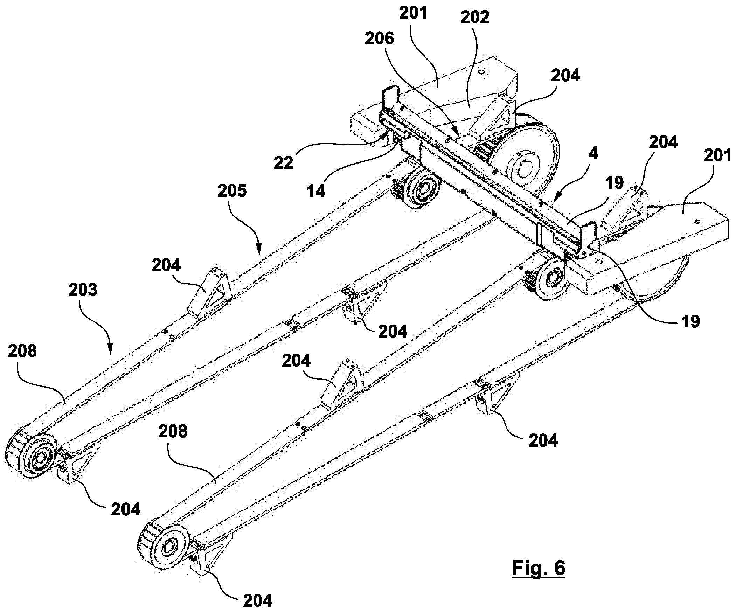

Die Hindurchführung der Kupplung 4 durch die Taschenführung 201 und die dadurch bewirkte Ablösung der Kupplungshälften 5, 6 voneinander ist in den Figuren 6 bis 9 im Detail gezeigt. Zum besseren Verständnis zeigt die Figur 6 die in Bezug auf die Zuführung und Auslösung der Kupplung im Wesentlichen Bestandteile der in Fig. 5 gezeigten beispielhaften Ausführungsform der Entladestation 200. Der bereits beschriebene Taschenmitnehmer 203 kann einen umlaufenden Riemen aufweisen.

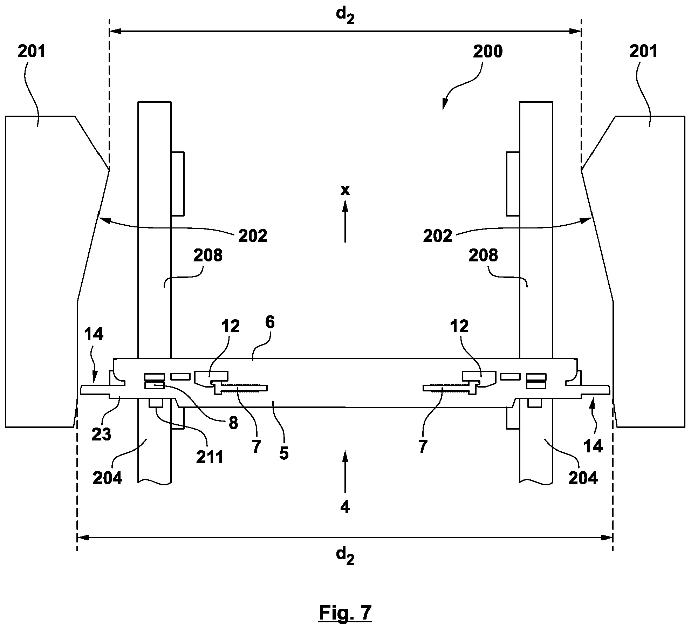

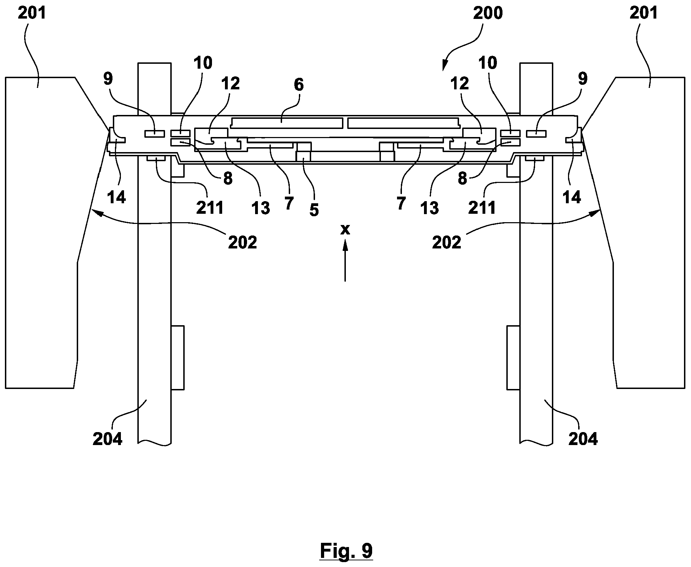

Die Figur 6 zeigt wie die Kupplung 4 von dem Taschenmitnehmer 203 der Taschenführung 201 zugeführt und an der Taschenführung 201 ausgelöst wird. Der Taschenmitnehmer 203 weist Mitnehmerelemente 204 auf, die außenseitig auf einem umlaufenden Riemen 205 angeordnet sind. Der Riemen 205 ist als ein Zahnriemen ausgebildet, der über eine Mehrzahl Umlenkrollen umlaufend geführt ist. Der Riemen 205 bildet einer Rampe, mithin ist er unter einem austeigenden spitzen Winkel zur Horizontalen geführt. Die beiden umlaufenden Riemen 205 weisen einen Abstand zueinander auf, der gerade danach bemessen ist, dass der Taschenmitnehmer 203 an gegenüberliegenden Längsenden der Kupplung 4 mit seinen Mitnehmerelementen 204 angreifen kann. Die Mitnehmerelemente 204 weisen einen Magnet 211 auf, der mit dem magnetischen Element 8 der den Magnetschieber 11 aufweisenden Kupplungshälfte 5 gekoppelt werden kann. Dies ist insbesondere in Figur 7 zu erkennen, wo der Magnet 211 des Mitnehmerelements 204 in der Flucht zu dem Magnet 8 der ersten Kupplungshälfte 5 steht. Es ist weiterhin zu erkennen, (siehe Figur 9), dass im Verlaufe der Verlagerung des Magnetschiebers 11 aus der in Figur 7 gezeigten Verriegelungsposition in die in Figur 9 gezeigte Auslöseposition auch der Eingriff zwischen dem Magneten 211 des Mitnehmerelements 204 und dem magnetischen Element 8 der ersten Kupplungshälften 5 getrennt wird. Da in der in Figur 9 gezeigten Position die Kupplung jedoch bereits prozesssicher in die Auslöseposition überführt worden ist, ist die Entkopplung zwischen den Magneten 8, 211 des Mitnehmerelements 204 und der ersten Kupplungshälfte 5 unkritisch.

Aufgrund des zur Horizontalen unter einem spitzen Winkel ansteigenden Verlaufs des Taschenmitnehmers 203 und insbesondere des Gurtes 205 kommt die in der horizontalen Förderrichtung x dem Taschenmitnehmer 203 zugeführte Tasche 1 früher oder später in den Eingriffsbereich eines Mitnehmerelements 204, sodass eine magnetische Kopplung zwischen der Kupplung 4 und dem magnetischen Mitnehmerelements 204 erfolgen kann. Die umlaufenden Riemen 205 des Taschenmitnehmer 203 sind in Bezug auf ihre jeweiligen Mitnehmerelemente 204 gleichlaufend synchronisiert, sodass die Mitnehmerelemente 204 sich paarweise gegenüberstehend fluchten und somit an gegenüberliegenden Enden der Kupplung 4 angekoppelt werden können. Die Kupplung 4 erfährt somit einen definierten Vorschub in der Förderrichtung x bzw. unter einem spitzen Winkel zu der Förderrichtung x die Rampe des Riemens 205 hinauf, bis die Kupplung 4 auf die Taschenführung 201 trifft.

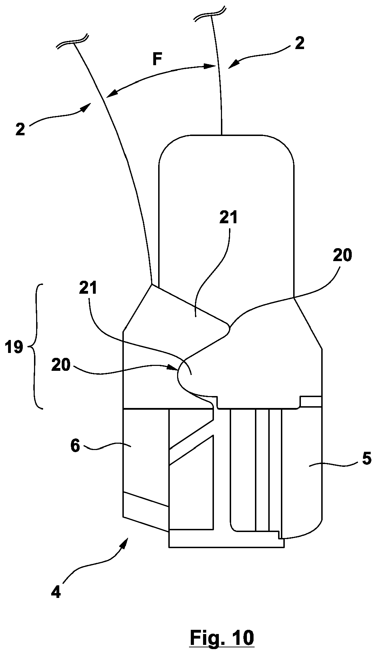

Wie in Figur 6 zu erkennen ist, weist die Kupplung 4 einen den Seitenwänden der Tasche (nicht dargestellt) zugewandten Kupplungsabschnitt auf, der beispielsweise als der in Figur 10 dargestellte Formschlussabschnitt 19 ausgebildet sein kann. Dieser Formschlussabschnitt 19 weist eine horizontale Breite senkrecht zur Förderrichtung x auf, die größer als die lichte Breite zwischen den gegenüberliegenden Taschenführungen 201 ist, sodass die Tasche auf der Taschenführung 201 abgestützt ist. Insbesondere ist die Kupplung 4, über welche die Tasche 1 auf der Taschenführung 201 abgestützt ist, dadurch mechanisch entlastet, was eine Betätigung des Stellmechanismus 7 der Kupplung 4 erleichtert.

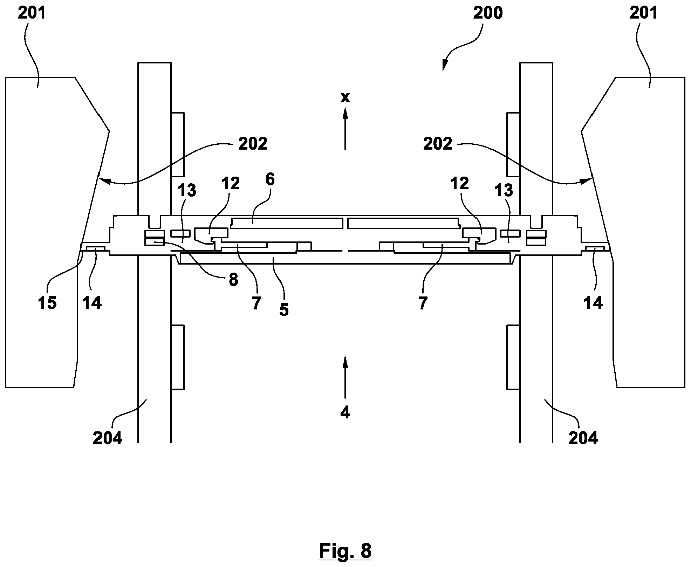

Die Betätigung des Verstellmechanismus ist anhand der Figuren 7 bis 9 erläutert. Nachdem gemäß Figur 7 die Kupplung 4 mithilfe der auf dem umlaufenden Riemen 5 angeordneten Mitnehmerelemente 204 soweit der Taschenführung 201 angenähert worden ist, dass die Kupplung 4 noch berührungslos zwischen gegenüberliegenden Seiten der beiden Teilelemente der Taschenführung 201 angeordnet ist, führt das weitere Verlagern der Kupplung 4 in der Förderrichtung x dazu, dass die Kupplung 4 mit ihren Betätigungselementen 14 an gegenüberliegenden Stirnseiten der Kupplung 4 und insbesondere mit jeweiligen Anlaufkonturen 15 an den äußeren gegenüberliegenden Stirnseiten der Betätigungsenden 14 auf gegenüberliegende Anfahrwände 202 der Taschenführung 201 trifft, die in Förderrichtung x aufeinander zulaufen, mithin das horizontale lichte Öffnungsmaß der Taschenführung 201 verringern. Nachdem die Kupplung 4 mit ihren Betätigungsenden 14 in der in Figur 8 gezeigten Erstkontaktposition auf die Anfahrwände 202 getroffen ist, führt das weitere Verlagern der Kupplung 4 in der Förderrichtung x dazu, dass die Betätigungsenden 14 an den gegenüberliegenden Stirnseiten der Kupplung 4 in das Gehäuse 16 der Kupplung 4 eingeschoben werden, wodurch die beiden Stellmechanismen 7 in der bereits mit Bezug auf die Figuren 2 bis 4c beschriebenen Weise betätigt werden, sodass die Kupplung 4 mit dem Erreichen der in Figur 9 gezeigten relativen Anordnung in Bezug auf die Taschenführung 201 ihre Auslöseposition erreicht, in welcher die beiden Kupplungshälften 5, 6 voneinander abgelöst werden können, also insbesondere sowohl die mechanische Anziehung zwischen den magnetischen Elementen 8, 9 als auch die Verrastung durch den in die hinterschnittige Aufnahme 13 eingreifenden Haken 12 unterbrochen ist.

Die Figur 10 zeigt eine besonders vorteilhafte Ausführungsform einer Kupplung 4, bei der die Kupplungshälften 5, 6 nicht unmittelbar an die Seitenwände 2 der Tasche 1 angekoppelt sind, sondern vermittelt über einen Formschlussabschnitt 19, wodurch insbesondere die Stellmechanik 7 von einer etwaigen Kraft F, die auf die Seitenwände 2 wirkt und zu einer Verkantung der beiden sich in der Verriegelungsposition befindenden Kupplungshälften 5, 6 führen könnte, entgegenwirkt. Insbesondere dann, wenn die Verriegelungsmechanik lediglich für die magnetische Kopplung der beiden Kupplungshälften 5, 6 ausgelegt ist und allein magnetisch die für den Zusammenhalt der Kupplungshälften 5, 6 erforderliche Haltekraft bereitgestellt ist, kann der Formschlussabschnitt 19 die Tragkraft der Tasche erhöhen, innerhalb welcher prozesssicher Gegenstände mit der Tasche transportiert werden können, insbesondere dahingehend, dass eine versehentliche Auslösung der Kupplung und damit ein Herausfallen der Gegenstände verhindert wird.

Wenn die Kupplung 4, insbesondere die Stellmechanik 11 weiterhin die bereits zuvor beschriebenen Rastmittel bestehend aus einem Haken 12 und einer hinterschnittigen Aufnahme 13 aufweist, kann der Formschlussabschnitt 19 dazu dienen, ein Verkanten des Hakens in dem Formschlussadapter zu vermeiden, sodass die prozesssichere Betätigung der Stellmechanik 7 durch Verlagerung des Magnetschiebers 11 auch bei großen und sperrigen Gegenständen, welche eine erhebliche horizontal wirkende Kraft auf die Seitenwände 2 ausüben, gewährleistet ist. Insbesondere weist der Formschlussabschnitt 19 eine Nut 20 und eine in die Nut 20 eingreifende Feder 21 auf, wobei die Nut insofern doppelt ausgeführt ist, als dass jeweils angrenzend an ihre Nut 20 jede der beiden Kupplungshälften 5, 6 auch eine Feder 21 aufweist, wobei je Kupplungshälfte 5, 6 die Nut und die Feder unmittelbar ineinander übergehen.

**Bezugszeichenliste:**

| | | | |
|---|---|---|---|
| 1 | Tasche | 102 | Weiche |
| 2 | Seitenwand | 103 | Schrägförderer |
| 3 | Taschenboden | 104 | Entladearbeitsplatz |
| 4 | Kupplung | 105 | Stauförderer |
| 5 | erste Kupplungshälften | 106 | Überfüllsensor |
| 6 | zweite Kupplungshälften | 107 | Transferförderer |
| 7 | Stellmechanik | 108 | Übergang Transferförderer auf Stauförderer |
| 8 | erstes magnetisches Element | | |
| 9 | zweites magnetisches Element | 200 | Entladestation |
| 10 | drittes magnetisches Element | 201 | Taschenführung |
| 11 | Magnetschieber | 202 | Anfahrwand |
| 12 | Haken | 203 | Taschenmitnehmer |
| 13 | Hakenaufnahme | 204 | Mitnehmerelement |
| 14 | Betätigungsende | 205 | Rampe |
| 15 | Anlaufkontur | 206 | Plateau |
| 16 | Gehäuse | 207 | Rutsche |
| 17 | Formschlussaufnahme | 208 | Riemen |
| 18 | Ende | 209 | Schwenkrahmen |
| 19 | Formschlussabschnitt | 210 | Seitenführung |
| 20 | Nut | 211 | Permanentmagnet |
| 21 | Feder | X | Förderrichtung |
| 22 | Unterseite | Z | Schwenkachse |
| 23 | Gehäuseaußenseite | F | Kraft |
| 100 | Hängeförderer | | |
| 101 | Förderschiene | | |

## Patentansprüche

1. Hängeförderer (100) mit einer Entladestation (200), der mindestens eine an einer Förderschiene (101) des Hängeförderers (100) hängende Tasche (1) des Hängeförderers (100) zugeführt ist, wobei die Tasche (1) zwei Seitenwände (2) aufweist, die an einem Taschenboden (3) über eine Kupplung (4) miteinander verbunden sind, wobei die Kupplung (4) an mindestens einer von zwei gegenüberliegenden Stirnseiten ein senkrecht zur Förderrichtung (x) der Tasche (1) von der Stirnseite abstehendes Betätigungsende (14) eines Schiebers (11) einer Stellmechanik (7) der Kupplung (4) für die Kupplungsauslösung und die Entladestation (200) eine sich entlang der Förderrichtung (x) in Breitenrichtung verjüngende Taschenführung (201) aufweist, durch welche die Kupplung (4) mit dem Betätigungsende (14) hindurch geführt ist und die an dem Betätigungsende (14) angreift, **dadurch gekennzeichnet, dass** sich die Taschenführung (201) entlang der Förderrichtung (x) in Breitenrichtung verjüngt.

2. Hängeförderer (100) nach Anspruch 1, bei dem die Taschenführung (201) gegenüberliegende Anfahrwände (202) aufweist, die sich in Förderrichtung (x) von einem ersten Abstand (d1) auf einen zweiten Abstand (d2) einander annähern, wobei der erste Abstand (d1) größer als eine sich zwischen den gegenüberliegenden Anfahrwänden (202) erstreckende Breite der Kupplung (4) einschließlich des mindestens einen Betätigungsendes (14) ist, wenn sich der Schieber (11) der Stellmechanik (7) in einer Verriegelungsposition der Kupplung (4) befindet, und wobei der zweite Abstand (d2) einer Breite der Kupplung (4) einschließlich des mindestens einen Betätigungsendes (14) entspricht, wenn sich der Schieber (11) der Stellmechanik in einer weiter über die Stirnseite in die Kupplung (4) eingeschobenen Auslöseposition der Kupplung (4) befindet.

3. Hängeförderer (100) nach Anspruch 1 oder 2, bei dem die Entladestation (200) einen Taschenmitnehmer (203) aufweist, der an der Kupplung (4) angreift und die Kupplung (4) in der Förderrichtung (x) antreibt.

4. Hängeförderer (100) nach Anspruch 3, bei dem der Taschenmitnehmer (203) die Kupplung (4) in der Förderrichtung (x) mindestens mit einer Geschwindigkeit antreibt, die einer Vorschubgeschwindigkeit der Förderschiene (101) entspricht, wobei die Geschwindigkeit des Taschenmitnehmers (203) vorzugsweise höher als die Vorschubgeschwindigkeit und besonders bevorzugt mindestens 20 % höher als die Vorschubgeschwindigkeit ist.

5. Hängeförderer (100) nach Anspruch 3 oder 4, bei dem der Taschenmitnehmer (203) magnetische Mitnehmerelemente (204) aufweist, die einzeln oder paarweise an magnetischen Elementen (8, 9, 10) der Kupplung (4) gekoppelt sind.

6. Hängeförderer (100) nach Anspruch 5, bei dem die magnetischen Mitnehmerelemente (204) paarweise gleichlaufend und fluchtend von dem Taschenmitnehmer (203) angetrieben sind.

7. Hängeförderer (100) nach Anspruch 6, bei dem die paarweise gleichlaufend und fluchtend angetriebenen magnetischen Mitnehmerelemente (204) am Außenumfang zweier umlaufender Zugmittel, wie Ketten, Riemen (208) oder Bänder, angeordnet sind.

8. Hängeförderer (100) nach einem der Ansprüche 5 bis 7, bei der die magnetischen Elemente (8, 9, 10) der Kupplung (4) dieselben magnetischen Elemente sind, mit denen die Kupplung (4) in einer Verriegelungsposition zweier Kupplungshälften (5, 6) der Kupplung (4), in der die Kupplungshälften (5, 6) aneinander festgelegt sind, gehalten werden.

9. Hängeförderer (100) nach Anspruch 8, bei der die magnetischen Elemente (8, 9, 10) der Kupplung (4) Permanentmagnete sind, die mit einem ersten ihrer beiden Pole eine magnetische Anziehungskraft zwischen den Kupplungshälften (5, 6) bereitstellen und mit einem zweiten ihrer Pole, mit dem die magnetischen Elemente (8, 9, 10) der Kupplung (4) einem der magnetischen Mitnehmerelemente (204) zugewandt sind, mit dem magnetischen Mitnehmerelement (204) gekoppelt sind.

10. Hängeförderer (100) nach einem der Ansprüche 3 bis 9, bei dem die Förderschiene (101) horizontal geführt und dementsprechend die Tasche (1) der Entladestation (200) in horizontaler Förderrichtung (x) zugeführt ist, wobei der Taschenmitnehmer (203) mit seinen Mitnehmerelementen (204) unter einem ansteigenden spitzen Winkel der Kupplung (4) zugeführt ist.

11. Hängeförderer (100) nach einem der Ansprüche 3 bis 10, bei dem die Kupplung (4) der Tasche (1) von dem Taschenmitnehmer (203) eine ansteigende Rampe (205) der Entladestation (200) herauf gefördert ist, sodass der Taschenboden (3) mit der Kupplung (4) auf der Rampe (205) abgestützt ist.

12. Hängeförderer (100) nach Anspruch 11, bei dem die Rampe (205), ein sich in der Förderrichtung (x) an die Rampe (205) anschließendes Plateau (206), oder eine sich an die ansteigende Rampe (205) oder das Plateau (206) anschließende abfallende Rutsche (207) zumindest teilweise zwischen gegenüberliegenden Anfahrwänden (202) der sich verjüngenden Taschenführung (201) angeordnet ist.

13. Hängeförderer (100) nach Anspruch 11 oder 12, bei dem anschließend an eine Auslöseposition der Entladestation (200), bei der die Taschenführung (201) eine maximale Verjüngung aufweist, die Abstützung des Taschenbodens (3) durch die Rampe (205) und/oder ein sich an die Rampe (205) anschließendes Plateau (206) unterbrochen ist.

14. Hängeförderer (100) nach einem der Ansprüche 11 bis 13, bei dem die Rampe (205) und/oder das Plateau (206) von mindestens einem umlaufenden Zugmittel (208) an dessen jeweiliger der Kupplung (4) zugewandter Außenseite die magnetischen Mitnehmerelemente (204) angeordnet sind, bereitgestellt ist.

15. Hängeförderer (100) nach einem der vorangegangen Ansprüche, bei dem zumindest die sich in Förderrichtung (x) verjüngende Taschenführung (201) und vorzugsweise weiterhin ein Taschenmitnehmer (203), der an der Kupplung (4) angreift und die Kupplung (4) in der Förderrichtung (x) antreibt, an einem um eine horizontale Achse (z) verschwenkbaren Schwenkrahmen (209) der Entladestation (200) angeordnet ist, wobei die Taschenführung (201) unter einem Abstand zu der Schwenkachse (z) angeordnet ist, sodass der Abstand der Taschenführung (201) zu der Förderschiene (101) einstellbar ist.

## Claims

1. Suspended conveyor (100) with an unloading station (200) to which at least one pouch (1) of the suspended conveyor (100) hanging on a conveying rail (101) of the suspended conveyor (100) is supplied, wherein the pouch (1) has two side walls (2) which are connected to one another at a pouch bottom (3) via a coupling (4), the coupling (4) having, on at least one of two opposite faces, an actuation end (14), protruding from the face perpendicularly to the conveying direction (x) of the pouch (1), of a slider (11) of an actuation mechanism (7) of the coupling (4) for releasing the coupling, and the unloading station (200) having a pouch guide (201) tapering along the conveying direction (x) in the width direction through which the coupling (4) is guided with the actuation end (14) and which engages the actuation end (14), **characterized in that** the pouch guide (201) tapers along the conveying direction (x) in the width direction.

2. Suspended conveyor (100) according to claim 1, wherein the pouch guide (201) has opposing approach walls (202) that approach each other in the conveying direction (x) from a first distance (d1) to a second distance (d2), the first distance (d1) being greater than a width of the coupling (4) including the at least one actuation end (14) extending between the opposing approach walls (202), when the slider (11) of the actuation mechanism (7) is in a locking position of the coupling (4), and wherein the second distance (d2) corresponds to a width of the coupling (4) including the at least one actuation end (14) when the slider (11) of the actuating mechanism is in a trigger position of the coupling (4) inserted further over the face into the coupling (4).

3. Suspended conveyor (100) according to claim 1 or 2, wherein the unloading station (200) includes a pouch carrier (203) that engages the coupling (4) and drives the coupling (4) in the conveying direction (x).

4. Suspended conveyor (100) according to claim 3, wherein the pouch carrier (203) drives the coupling (4) in the conveying direction (x) at least at a speed corresponding to a feed speed of the conveying rail (101), the speed of the pouch carrier (203) preferably being higher than the feed speed and particularly preferably being at least 20% higher than the feed speed.

5. Suspended conveyor (100) according to claim 3 or 4, wherein the pouch carrier (203) comprises magnetic carrier elements (204) coupled individually or in pairs to magnetic elements (8, 9, 10) of the coupling (4).

6. Suspended conveyor (100) according to claim 5, wherein the magnetic carrier elements (204) are driven in pairs synchronous and in alignment by the pouch carrier (203).

7. Suspended conveyor (100) according to claim 6, wherein the magnetic carrier elements (204) driven in pairs synchronous and in alignment are arranged on the outer circumference of two circulating traction means, such as chains, belts (208) or straps.

8. Suspended conveyor (100) according to any one of claims 5 to 7, wherein the magnetic elements (8, 9, 10) of the coupling (4) are the same magnetic elements used to hold the coupling (4) in a locking position of two coupling halves (5, 6) of the coupling (4) in which the coupling halves (5, 6) are fixed to each other.

9. Suspended conveyor (100) according to claim 8, wherein the magnetic elements (8, 9, 10) of the coupling (4) are permanent magnets that provide a magnetic attraction force between the coupling halves (5, 6) with a first of their two poles and are coupled to the magnetic carrier element (204) with a second of their poles with which the magnetic elements (8, 9, 10) of the coupling (4) face one of the magnetic carrier elements (204).

10. Suspended conveyor (100) according to any one of claims 3 to 9, in which the conveying rail (101) is guided horizontally and, accordingly, the pouch (1) is fed to the unloading station (200) in horizontal conveying direction (x), the pouch carrier (203) being fed with its carrier elements (204) to the coupling (4) at an ascending acute angle.

11. Suspended conveyor (100) according to any one of claims 3 to 10, wherein the coupling (4) of the pouch (1) is conveyed up an ascending ramp (205) of the unloading station (200) by the pouch carrier (203) so that the pouch bottom (3) with the coupling (4) is supported on the ramp (205).

12. Suspended conveyor (100) according to claim 11, wherein the ramp (205), a plateau (206) adjoining the ramp (205) in the conveying direction (x), or a descending chute (207) adjoining the ascending ramp (205) or plateau (206) is arranged at least partially between opposing approach walls (202) of the tapering pouch guide (201).

13. Suspended conveyor (100) according to claim 11 or 12, wherein subsequent to a trigger position of the unloading station (200) at which the pouch guide (201) has a maximum tapering, the support of the pouch bottom (3) is interrupted by the ramp (205) and/or a plateau (206) adjoining the ramp (205).

14. Suspended conveyor (100) according to any one of claims 11 to 13, wherein the ramp (205) and/or the plateau (206) is provided by at least one circulating traction means (208) on the respective outer side of which facing the coupling (4) the magnetic carrier elements (204) are arranged.

15. Suspended conveyor (100) according to one of the preceding claims, in which at least the pouch guide (201) tapering in the conveying direction (x) and preferably further a pouch carrier (203) engaging the coupling (4) and driving the coupling (4) in the conveying direction (x), is arranged on a pivot frame (209) of the unloading station (200) pivotable about a horizontal axis (z), wherein the pouch guide (201) is arranged at a distance from the pivot axis (z) so that the distance of the pouch guide (201) from the conveying rail (101) is adjustable.

## Revendications

1. Convoyeur suspendu (100) avec une station de déchargement (200), dans laquelle est introduite un sac (1) du convoyeur suspendu (100), suspendu à un rail de convoyage (101) du convoyeur suspendu (100), dans lequel le sac (1) comprend deux parois latérales (2) qui sont reliées entre elles au niveau d'un fond de sac (3) par l'intermédiaire d'un couplage (4), dans lequel le couplage (4) comprend, au niveau d'au moins une parmi deux faces frontales opposées, une extrémité d'actionneur (14) d'un poussoir (11) d'un mécanisme de réglage (7) du couplage (4), s'éloignant de la face frontale perpendiculairement à la direction de convoyage (x) du sac (1), pour le détachement du couplage, et la station de déchargement (200) comprend un guidage de sac (201) se rétrécissant dans la direction de la largeur le long de la direction de convoyage (x), grâce auquel le couplage (4) est guidé avec l'extrémité d'actionnement (14) et qui agit sur l'extrémité d'actionnement (14), **caractérisé en ce que** le guidage de sac (201) se rétrécit dans la direction de la largeur le long de la direction de convoyage (x).

2. Convoyeur suspendu (100) selon la revendication 1, dans lequel le guidage de sac (201) comprend des parois d'approche opposées (202) qui se rapprochent entre elles dans la direction de convoyage (x) d'une première distance (d1) à une deuxième distance (d2), dans lequel la première distance (d1) est supérieure à une largeur du couplage (4) s'étendant entre les parois d'approche opposées (202), y compris l'au moins une extrémité d'actionnement (14), lorsque le poussoir (11) du mécanisme de réglage (7) se trouve dans une position de verrouillage du couplage (4), et dans lequel la deuxième distance (d2) correspond à une largeur du couplage (4), y compris l'au moins une extrémité d'actionnement (14), lorsque le poussoir (11) du mécanisme de réglage se trouve dans une position de détachement du couplage (4) insérée plus loin par l'intermédiaire de la face frontale dans le couplage (4).

3. Convoyeur suspendu (100) selon la revendication 1 ou 2, dans lequel la station de déchargement (200) comprend un taquet d'entraînement de sac (203) qui agit sur le couplage (4) et qui entraîne le couplage (4) dans la direction de convoyage (x).

4. Convoyeur suspendu (100) selon la revendication 3, dans lequel le taquet d'entraînement de sac (203) entraîne le couplage (4) dans la direction de convoyage (x) au moins avec une vitesse qui correspond à la vitesse d'avance du rail de convoyage (101), dans lequel la vitesse du taquet d'entraînement de sac (203) est de préférence supérieure à la vitesse d'avance et plus particulièrement de préférence de 20 % supérieure à la vitesse d'avance.

5. Convoyeur suspendu (100) selon la revendication 3 ou 4, dans lequel le taquet d'entraînement de sac (203) comprend des éléments d'entraînement magnétiques (204) qui sont couplés individuellement ou par paires à des éléments magnétiques (8, 9, 10) du couplage (4).

6. Convoyeur suspendu (100) selon la revendication 5, dans lequel les éléments d'entraînement magnétiques (204) sont entraînés de manière synchrone par paires et de manière alignée par le taquet d'entraînement de sac (203).

7. Convoyeur suspendu (100) selon la revendication 6, dans lequel les éléments d'entraînement magnétiques (204) entraînés de manière synchrone par paires et de manière alignée sont disposés sur la circonférence extérieure de deux moyens de traction rotatifs, comme des chaînes, des courroies (208) ou des bandes.

8. Convoyeur suspendu (100) selon l'une des revendications 5 à 7, dans lequel les éléments magnétiques (8, 9, 10) du couplage (4) sont les mêmes éléments magnétiques que ceux avec lesquels le couplage (4) est maintenu dans une position de verrouillage de deux moitiés de couplage (5, 6) du couplage (4), dans laquelle les moitiés de couplage (5, 6) sont fixées l'une à l'autre.

9. Convoyeur suspendu (100) selon la revendication 8, dans lequel les éléments magnétiques (8, 9, 10) du couplage (4) sont des aimants permanents qui génèrent, avec un premier de leurs deux pôles, une force d'attraction magnétique entre les moitiés de couplage (5, 6) et sont couplés, avec un deuxième de leurs pôles, avec lequel les éléments magnétiques (8, 9, 10) du couplage (4) sont orientés vers un des éléments d'entraînement magnétiques (204), avec l'élément d'entraînement magnétique (204).

10. Convoyeur suspendu (100) selon l'une des revendications 3 à 9, dans lequel le rail de convoyage (101) est guidé horizontalement et par conséquent le sac (1) est introduit dans la station de déchargement (200) dans une direction de convoyage horizontale (x), dans lequel le taquet d'entraînement de sac (203), avec ses éléments d'entraînement (204), est introduit avec un angle aigu croissant, dans le couplage (4).

11. Convoyeur suspendu (100) selon l'une des revendications 3 à 10, dans lequel le couplage (4) du sac (1) est convoyé par le taquet d'entraînement de sac (203) en montant une rampe ascendante (205) de la station de déchargement (200), de sorte que le fond de sac (3) avec le couplage (4) s'appuie sur la rampe (205).

12. Convoyeur suspendu (100) selon la revendication 11, dans lequel la rampe (205), un plateau (206) se raccordant à la rampe (205) dans la direction de convoyage (x) ou une goulotte de descente (207), se raccordant à la rampe ascendante (205) ou au plateau (206), est disposée au moins partiellement entre des parois d'approche (202) opposées du guidage de sac (201) qui se rétrécit.

13. Convoyeur suspendu (100) selon la revendication 11 ou 12, dans lequel, après une position de détachement de la station de déchargement (200), dans laquelle le guidage de sac (201) présente un rétrécissement maximal, l'appui du fond de sac (3) par la rampe (205) et/ou un plateau (206) se raccordant à la rampe (205) est interrompu.

14. Convoyeur suspendu (100) selon l'une des revendications 11 à 13, dans lequel la rampe (205) et/ou le plateau (206) est mis à disposition par au moyen un moyen de traction rotatif (208), au niveau de la face externe duquel, orientée vers le couplage (4), sont disposés les éléments d'entraînement magnétiques (204).

15. Convoyeur suspendu (100) selon l'une des revendications précédentes, dans lequel au moins le guidage de sac (201) se rétrécissant dans la direction de convoyage (x) et de préférence en outre un taquet d'entraînement de sac (203), qui agit sur le couplage (4) et entraîne le couplage (4) dans la direction de convoyage (x), est disposé au niveau d'un châssis pivotant (209) de la station de déchargement (200) pivotant autour d'un axe horizontal (z), dans lequel le guidage de sac (201) est disposé à une distance de l'axe de pivotement (z), de sorte que la distance entre le guidage de sac (201) et le rail de convoyage (101) est réglable.
